**Europäisches Patentamt**

**European Patent Office**

**Office européen des brevets**

(19)

(11) **EP 1 243 898 A1**

(12) **EUROPÄISCHE PATENTANMELDUNG**

(43) Veröffentlichungstag:
    **25.09.2002 Patentblatt 2002/39**

(51) Int Cl.$^7$: **G01D 5/14**, G01D 5/16

(21) Anmeldenummer: **01810298.8**

(22) Anmeldetag: **23.03.2001**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(71) Anmelder: **SENTRON AG**
    **6300 Zug (CH)**

(72) Erfinder:
    • **Popovic, Radivoje Dr.**
      **1025 St. Sulpice (CH)**

    • **Schott, Christian Dr.**
      **1110 Morges (CH)**
    • **Zalunardo, Ivano**
      **1213 Petit-Lancy/Genève (CH)**

(74) Vertreter: **Falk, Urs, Dr.**
    **Patentanwaltsbüro Dr. Urs Falk,**
    **Eichholzweg 9A**
    **6312 Steinhausen (CH)**

(54) **Magnetischer Weggeber**

(57)    Ein magnetischer Weggeber umfasst eine Magnetfeldquelle (2) und einen Magnetfeldsensor (3), die entlang einer vorgegebenen Bahn (6) relativ zueinander verschiebbar sind. Der Magnetfeldsensor (3) misst zwei Komponenten des von der Magnetfeldquelle (2) erzeugten Magnetfeldes. Aus den gemessenen Komponenten wird dann ein Positionssignal abgeleitet, das die relative Lage von Magnetfeldsensor (3) und Magnetfeldquelle (2) darstellt. Erfindungsgemässe Ausführungen des Weggebers zeichnen sich dadurch aus, dass die Bestimmung des Positionssignals eine Division der beiden gemessenen Komponenten des Magnetfeldes beinhaltet. Diese erfindungsgemässen Ausführungen weisen den Vorteil auf, dass das Positionssignal eine lineare Funktion des Ortes ist.

Fig. 1

**Beschreibung**

Die Erfindung betrifft eine Vorrichtung mit einem magnetischen Weggeber der im Oberbegriff des Anspruchs 1 genannten Art.

Kontaktlose Weggeber für Wege im Submillimeterbereich werden heute in grossen Stückzahlen in Vorrichtungen der Maschinen- und Automobilindustrie eingesetzt.

Bei Anwendungen, bei welchen die Weggeber starkem Schmutz, wie Staub, Fasern, Öldämpfe, etc. ausgesetzt sind, stellen magnetische Weggeber eine robuste und preiswerte Alternative zu den weitverbreiteten optischen Weggebern dar, da sie keine dichte Kapselung zwischen dem bewegtem und dem unbewegtem Maschinenteil der Vorrichtung benötigen.

Eine Vorrichtung mit einem magnetischen Weggeber der im Oberbegriff des Anspruchs 1 genannten Art ist aus der DE 197 12 829 bekannt. Diese Vorrichtung weist einen entlang einer Achse verschiebbaren Kolben mit einem ringförmigen Magneten auf. Für die Bestimmung der Lage des Kolbens sind zwei Magnetfeldsensoren vorgesehen, wovon der eine die Komponente des vom Magneten erzeugten Magnetfeldes in axialer Richtung und der andere die Komponente des vom Magneten erzeugten Magnetfeldes in radialer Richtung misst. Die axiale Richtung des Magnetfeldes entspricht dabei der Verschiebungsrichtung des Kolbens. Weil die Ausgangssignale der beiden Magnetfeldsensoren nichtlinear sind, eignet sich die Vorrichtung nicht für die Bestimmung eines der kontinuierlichen Lage des Kolbens entsprechenden Positionssignals, sondern nur zur Bestimmung, ob der Kolben eine vorbestimmte Lage erreicht hat.

Eine gleiche Vorrichtung ist aus der EP 1 074 815 bekannt. Hier wird vorgeschlagen, die Ausgangssignale der beiden Magnetfeldsensoren zu kombinieren, um ein Positionssignal zu erhalten, das für die Bestimmung der kontinuierlichen Lage des Kolbens geeignet ist. Nachteilig ist, dass auch dieses Positionssignal nichtlinear ist.

Eine weitere Vorrichtung für die Bestimmung, ob ein Element eine vorbestimmte Lage erreicht hat, ist aus der EP 726 448 bekannt.

Der Erfindung liegt die Aufgabe zugrunde, eine Vorrichtung mit einem magnetischen Weggeber zu entwickeln, der über einen vergleichsweise grossen Arbeitsbereich ein lineares Ausgangssignal liefert.

Die Erfindung ist im Anspruch 1 gekennzeichnet. Weiterbildungen der Erfindung ergeben sich aus den abhängigen Ansprüchen.

Nachfolgend werden Ausführungsbeispiele der Erfindung anhand der Zeichnung näher erläutert.

Der magnetische Weggeber umfasst naturgemäss eine Magnetfeldquelle und einen Magnetfeldsensor, die entlang einer vorgegebenen Bahn relativ zueinander verschiebbar sind. Der Magnetfeldsensor misst zwei Komponenten des von der Magnetfeldquelle erzeugten Magnetfeldes. Aus den gemessenen Komponenten wird dann ein Positionssignal abgeleitet, das die relative Lage von Magnetfeldsensor und Magnetfeldquelle darstellt. Erfindungsgemässe Ausführungen des Weggebers zeichnen sich dadurch aus, dass die Bestimmung des Positionssignals eine Division der beiden gemessenen Komponenten des Magnetfeldes beinhaltet. Diese erfindungsgemässen Ausführungen weisen den Vorteil auf, dass das Positionssignal eine lineare Funktion des Ortes ist.

Bei einem bevorzugten Ausführungsbeispiel, bei dem sich die Magnetfeldquelle und der Magnetfeldsensor relativ zueinander entlang einer Geraden verschieben, ist das von der Magnetfeldquelle erzeugte Magnetfeld rotationssymmetrisch bezüglich einer Symmetrieachse. Der Magnetfeldsensor misst erfindungsgemäss zwei Komponenten des Magnetfeldes, die beide in einer zur Symmetrieachse der Magnetfeldquelle orthogonal verlaufenden Ebene liegen. Bei der Relativverschiebung von Magnetfeldquelle und Magnetfeldsensor ändert die Richtung des Magnetfeldes in dieser Ebene in Bezug zu den durch den Magnetfeldsensor definierten Messrichtungen. Aus dieser Richtungsänderung lässt sich durch eine Division der beiden gemessenen Magnetfeldkomponenten ein lineares Positionssignal gewinnen.

Auch wenn der Magnetfeldsensor ortsfest angeordnet ist und sich die Magnetfeldquelle auf einer Kreisbahn bewegt, lässt sich aus dem Quotienten der beiden gemessenen Magnetfeldkomponenten in einem bestimmten Arbeitsbereich ein annähernd lineares Positionssignal gewinnen.

Nachfolgend werden Ausführungsbeispiele der Erfindung anhand der Zeichnung näher erläutert.

Es zeigen:

Fig. 1 eine Vorrichtung mit einem magnetischen Weggeber,
Fig. 2 in einer Messebene herrschende geometrische Verhältnisse,
Fig. 3 Details des Sensorteils eines weiteren magnetischen Weggebers,
Fig. 4 eine Magnetfeldquelle mit einem Magnetfeld mit radialer Symmetrie,
Fig. 5 eine Magnetfeldquelle mit einem Magnetfeld mit zirkularer Symmetrie,
Fig. 6 einen weiteren magnetischen Weggeber,
Fig. 7, 8 in der Messebene herrschende geometrische Verhältnisse,
Fig. 9 ein Diagramm,
Fig. 10 eine elektronische Schaltung, und
Fig. 11 einen magnetischen Weggeber mit mehreren Magnetfeldsensoren.

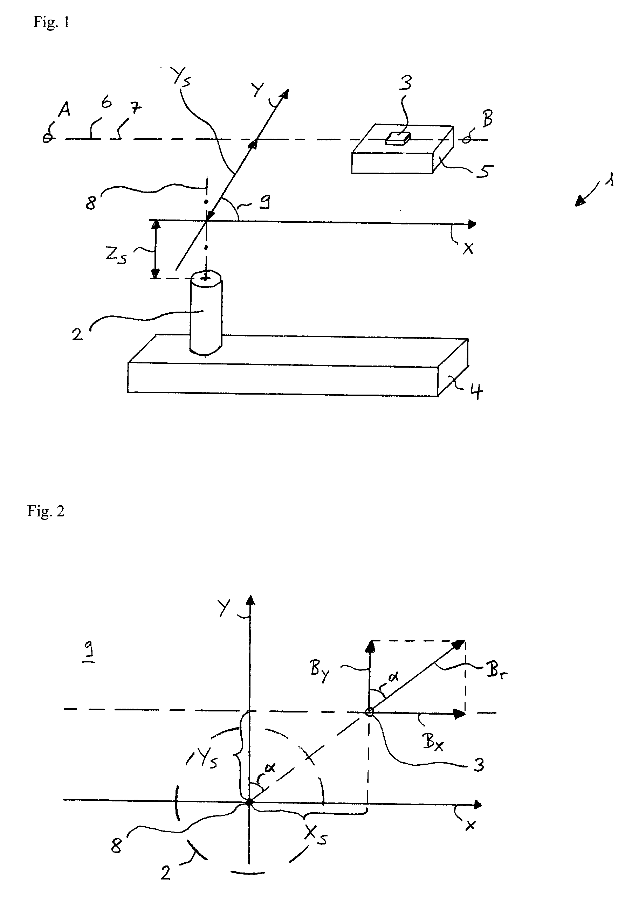

Die Fig. 1 zeigt auf schematische Weise eine Vorrichtung 1 mit einem magnetischen Weggeber, der eine Magnetfeldquelle 2 und einen Magnetfeldsensor 3 umfasst. Die Vorrichtung 1 weist ein erstes Bestandteil 4 und ein zweites Bestandteil 5 auf, deren Lage auf nicht näher erläuterte Weise relativ zueinander veränderbar ist. Die Magnetfeldquelle 2 ist am ersten Bestandteil 4 befestigt. Der Magnetfeldsensor 3 ist am zweiten Bestandteil 5 befestigt. Wenn die Lage des zweiten Bestandteils 5 relativ zur Lage des ersten Bestandteils 4 von einer ersten Endlage A in eine zweite Endlage B geändert wird, dann bewegt sich der Magnetfeldsensor 3 auf einer vorbestimmten Bahn 6 relativ zur Lage der Magnetfeldquelle 2. Die relative Lage der beiden Bestandteile 4 und 5 zueinander kann dann durch eine einzige Grösse X charakterisiert werden, die dem aktuellen Ort d des Magnetfeldsensors 3 auf der Bahn 6 entspricht. Der magnetische Weggeber dient dazu, den aktuellen Wert der Grösse X(d) zu ermitteln.

Bei dem in der Fig. 1 dargestellten Beispiel ist das erste Bestandteil 4 der Vorrichtung 1 mit der Magnetfeldquelle 2 stationär angeordnet und das zweite Bestandteil 5 mit dem Magnetfeldsensor 3 entlang einer vorgegebenen Geraden 7 zwischen den beiden Endlagen A und B verschiebbar. Als Magnetfeldquelle 2 ist ein zylindrischer Permanentmagnet vorgesehen. Das vom Permanentmagneten erzeugte Magnetfeld B ist rotationssymmetrisch bezüglich einer in Längsrichtung des Permanentmagneten verlaufenden Symmetrieachse 8. Die Gerade 7 und die Symmetrieachse 8 verlaufen orthogonal zueinander. Die Bahn 6 verläuft somit in einer orthogonal zur Symmetrieachse 8 verlaufenden Ebene 9. Mit x und y sind die Achsen eines kartesischen Koordinatensystems der Ebene 9 bezeichnet, dessen Ursprung mit dem Durchstosspunkt der Symmetrieachse **8** des Permanentmagneten zusammenfällt. Die Gerade **7** verläuft in einem Abstand $Y_S$ parallel zur x-Achse. Die Koordinaten des Magnetfeldsensors **3** in der Ebene **9** werden mit $(X_S, Y_S)$ bezeichnet, wobei der Wert $X_S$ mit der Veränderung der Relativlage der beiden Bestandteile 4 und 5 der Vorrichtung ändert, während der Wert $Y_S$ konstant bleibt. Die Ebene **9** verläuft zudem in einem vorbestimmten Abstand $Z_S$ oberhalb des oberen Endes des Permanentmagneten.

Die Fig. 2 zeigt die Ebene 9 in der Aufsicht. Der unterhalb der Ebene 9 angeordnete Permanentmagnet ist mit einer gestrichelten Linie dargestellt. Die Rotationssymmetrie des vom Permanentmagneten erzeugten Magnetfeldes B bedeutet, dass die Feldlinien in der Ebene 9 bezüglich des Ursprunges des xy-Koordinatensystems radial verlaufen. Mit dem Vektor $B_r$ ist die in der Ebene 9 liegende Komponente des Magnetfeldes B am Ort $(X_S, Y_S)$ des Magnetfeldsensors 3 dargestellt. Der Magnetfeldsensor 3 misst die Komponenten $B_x$ und $B_y$ des Magnetfeldes B. Seine x-Koordinate $X_S$ kann gemäss den folgenden Gleichungen

$$\tan(\alpha) = \frac{B_x}{B_y} = \frac{X_s}{Y_s} \tag{1}$$

bestimmt werden zu

$$X_S = Y_S \frac{B_x}{B_y} \tag{2}$$

Der Winkel $\alpha$ bezeichnet den Winkel zwischen der Richtung der radialen Komponente $B_r$ des Magnetfeldes und der y-Achse. Die Grösse $X_S$ stellt also das Positionssignal dar, das im wesentlichen durch Division der beiden Komponenten $B_x$ und $B_y$ gewonnen wird.

Montagebedingte Schwankungen des Abstands $Z_S$ haben praktisch keinen Einfluss auf das Positionssignal: Die absoluten Werte der Komponenten $B_x$ und $B_y$ ändern zwar mit dem Abstand $Z_S$, nicht aber deren Verhältnis. Temperaturbedingte Schwankungen der Empfindlichkeit des Magnetfeldsensors werden bei der Division ebenfalls weitgehend eliminiert. Sowohl der Abstand $Z_S$ als auch der Abstand $Y_S$ sind so gewählt, dass die in Bezug zur Symmetrieachse 8 radial verlaufende Komponente $B_r$ des Magnetfeldes möglichst gross ist.

Ein für diese Anwendung geeigneter, auf dem Halleffekt beruhender Magnetfeldsensor, der zwei orthogonal zueinander orientierte Komponenten des Magnetfeldes misst, wird von der Anmelderin unter der Bezeichnung 2D-VH-11 vertrieben. Ein weiterer geeigneter Magnetfeldsensor ist in der japanischen Patentanmeldung Nr. 2000-356684 beschrieben. Möglich ist auch die Verwendung magnetoresistiver Magnetfeldsensoren. Die vom Magnetfeldsensor 3 aufgespannten Messachsen sollten möglichst parallel zur x-Achse bzw. y-Achse ausgerichtet sein. Sonst muss die Verdrehung mittels einer Eichmessung bestimmt und bei der Bestimmung des Positionssignals mittels einer Koordinatentransformation berücksichtigt werden.

Mit einem aus SmCo bestehenden, zylindrischen Permanentmagneten, dessen Durchmesser 2 mm und dessen Länge 1 mm betrug, konnte für eine Bahn 6, die entlang der Geraden 7 im Abstand Z = 0.7 mm oberhalb des Permanentmagneten und im seitlichen Abstand $Y_S$ = 1.4 mm verlief, im Arbeitsbereich von $X_S$ = -1.5 mm bis $X_S$ = +1.5 mm ein Ausgangssignal erzielt werden, dessen Abweichung von einer linearen Ideallinie weniger als ± 0.5% betrug. Eine Verdrehung der Messachsen des Magnetfeldsensors 3 gegenüber dem xy-Koordinatensystem der Ebene 9 um 2° bewirkte ohne Korrektur zwar einen Fehler, dieser lag im genannten Arbeitsbereich von $X_S$ = -1.5 mm bis $X_S$ = +1.5 mm aber unterhalb von ± 1.5%.

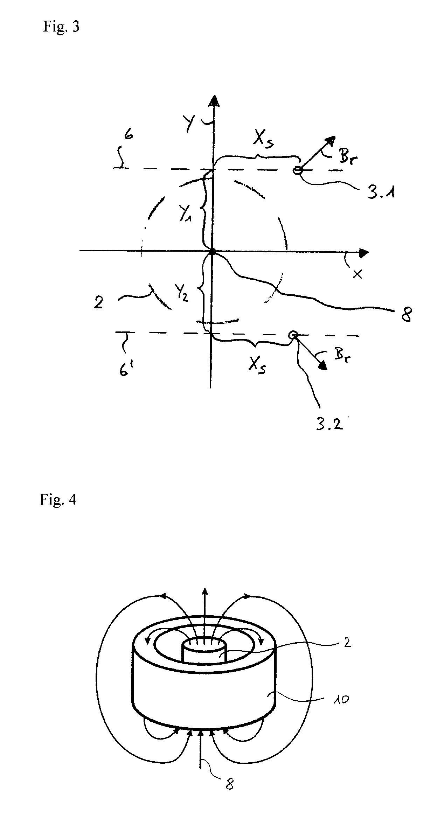

Wenn der Abstand $Y_S$ infolge unvermeidlicher Montagetoleranzen beispielsweise 1.5 mm statt 1.4 mm beträgt, dann ist das Positionssignal $X_S$ gemäss Gleichung (2) um den Faktor 1.5/1.4 grösser. Die Fig. 3 zeigt ein Ausführungsbeispiel mit zwei Magnetfeldsensoren 3.1 und 3.2, bei dem die Abhängigkeit des Positionssignals $X_S$ von montagebedingten Abweichungen markant geringer ist. Die beiden Magnetfeldsensoren 3.1 und 3.2 sind in der Ebene 9 im Idealfall im Abstand $y_1$ = +$Y_S$ bzw. $y_2$ = -$Y_S$ angeordnet und liefern je ein Ausgangssignal gemäss Gleichung (2). Der erste Magnetfeldsensor 3.1 bewegt sich auf der zur x-Achse parallelen Bahn 6, der zweite Magnetfeldsensor 3.2 bewegt sich auf einer ebenfalls zur x-Achse parallelen Bahn 6'. Die x-Koordinate des ersten und des zweiten Magnetfeldsensors 3.1 bzw. 3.2 sind gleich. Eine montagebedingte Vergrösserung des Abstandes $y_1$ des ersten Magnetfeldsensors 3.1 um den Wert $\Delta Y_S$ geht einher mit einer Verkleinerung des Abstandes $y_2$ des zweiten Magnetfeldsensors 3.2 um den Wert -$\Delta Y_S$. Durch Addition oder Multiplikation der Ausgangssignale der beiden Magnetfeldsensoren 3.1 und 3.2 erhält man ein Positionssignal, bei dem Montageabweichungen zum grossen Teil kompensiert sind und das somit gegenüber montagebedingten Ungenauigkeiten des Abstands $Y_S$ wesentlich unempfindlicher ist. Der Vorteil liegt darin, dass für viele Anwendungen ein Toleranzband von $\Delta Y_S$ = 0.1 mm ausreicht, um auf eine Kalibrierung des Weggebers nach dem Zusammenbau der Vorrichtung verzichten zu können.

Bei einem typischen Wert des Abstandes $Y_S$ von 1.4 mm können die beiden Magnetfeldsensoren 3.1 und 3.2 z.B. als CMOS Hallelemente zusammen mit der Auswerteelektronik auf einem einzigen Halbleiterchip angeordnet sein. Ihre gegenseitige Ausrichtung und ihr Abstand sind dann perfekt reproduzierbar.

Die Fig. 4 zeigt eine Vorrichtung mit einem ferromagnetischen Joch 10. Die Funktion des Jochs 10 besteht darin, das von der Magnetfeldquelle 2 erzeugte Magnetfeld (mit Feldlinien dargestellt) im Bereich der Ebene 9 zu konzentrieren. Sowohl die Magnetfeldquelle 2 als auch das Joch 10 sind hier rotationssymmetrisch bezüglich der Symmetrieachse 8.

Als Magnetfeldquelle 2 kann anstelle des Permanentmagneten auch eine Spule dienen. Der durch die Spule fliessende Strom kann dann moduliert und das Signal des Magnetfeldsensors mit der bekannten Lock-in Technik ermittelt werden.

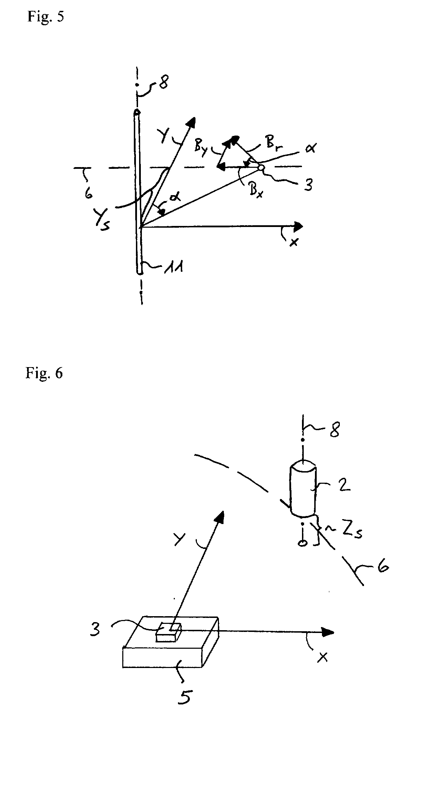

Als Magnetfeldquelle 2 kann, wie in der Fig. 5 gezeigt ist, anstelle des Permanentmagneten auch ein von einem Strom durchflossener Leiter 11 dienen. In diesem Fall ist das Magnetfeld bezüglich der Symmetrieachse 8 ebenfalls rotationssymmetrisch. Während der Verlauf des Magnetfeldes $B_r$ in der Ebene 9 beim Permanentmagneten bezüglich der Symmetrieachse 8 radial ist, ist er beim stromdurchflossenen Leiter 11 zirkular. Deshalb gilt in diesem Fall für die Koordinate $X_S$ des Magnetfeldsensors 3:

$$X_S = Y_S \frac{B_y}{B_x} \tag{3}$$

Das folgende, in der Fig. 6 dargestellte Ausführungsbeispiel entspricht weitgehend dem in der Fig. 1 gezeigten Beispiel. Allerdings bewegt sich die Magnetfeldquelle 2, vorzugsweise ein zylindrischer Permanentmagnet, bei diesem Beispiel entlang einer kreisförmigen Bahn 6, während der Magnetfeldsensor 3 ortsfest im Zentrum der kreisförmigen Bahn 6, aber im Abstand $Z_S$ unterhalb der unteren Stirnseite des Permanentmagneten, in der Ebene 9 angeordnet ist. Der Magnetfeldsensor 3 misst wiederum zwei kartesische Komponenten $B_x$ und $B_y$ des von der Magnetfeldquelle 2 erzeugten Magnetfeldes in der Ebene 9. Die Ebene 9 verläuft orthogonal zur Symmetrieachse 8 des Permanentmagneten.

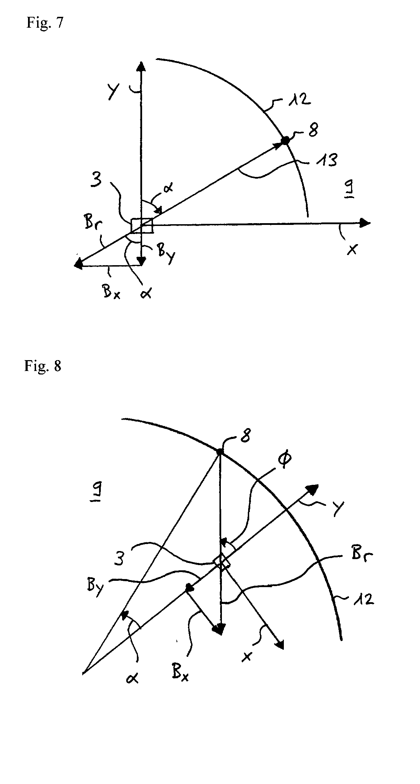

Die Fig. 7 zeigt die Verhältnisse in der Ebene 9. Wenn sich die Magnetfeldquelle 2 entlang des Kreises 12 bewegt, dann ändert sich die Richtung der in der Ebene 9 liegenden Komponente des Magnetfeldes $B_r$. Als Positionssignal eignet sich der Winkel $\alpha$ zwischen der y-Achse und dem Vektor 13, der vom Ursprung des xy-Koordinatensystems zum Durchstosspunkt der Symmetrieachse 8 des Permanentmagneten in der Ebene 9 zeigt. Es gilt:

$$\alpha = \arctan \frac{B_x}{B_y} \tag{3}$$

Die Fig. 8 zeigt die Verhältnisse in der Ebene 9 für ein Beispiel, bei dem der Magnetfeldsensor 3 nicht im Zentrum des Kreises 12, sondern an einem beliebigen Ort angeordnet ist, vorzugsweise an einem Ort, wo der Abstand des Magnetfeldsensors 3 von der kreisförmigen Bahn 6 kleiner als der Radius der kreisförmigen Bahn 6 ist. Die Messrichtungen x und y des Magnetfeldsensors 3 sind so orientiert, dass die in der Ebene 9 liegende Komponente $B_r$ des Magnetfeldes in Richtung der y-Achse verläuft, wenn der Winkel $\alpha$ verschwindet. Der Winkel zwischen der Magnetfeldkomponente $B_r$ und der y-Richtung des Magnetfeldsensors 3 ist als Winkel $\phi$ bezeichnet. Wenn sich der Magnetfeldsensor 3 relativ nahe beim Kreis 12 befindet, dann bewirken innerhalb eines vorgegebenen Arbeitsbereiches W kleine Positionsänderungen, d.h. kleine Änderungen des Winkels $\alpha$, vergleichsweise grosse Änderungen des Winkeis $\phi$ und somit grosse Änderungen des Messsignals des Magnetfeldsensors 3. Demgegenüber steht der Nachteil, dass das Messsignal nur in einem beschränkten Arbeitsbereich annähernd linear vom Winkel $\alpha$ abhängt.

Wenn mit $R_1$ der Abstand der Magnetfeldquelle 2 vom Mittelpunkt 14 der kreisförmigen Bahn 6 und mit $R_2$ der Abstand des Magnetfeldsensors 3 vom Mittelpunkt der kreisförmigen Bahn 6 bezeichnet wird, dann erhält man mit dem Sinussatz

$$\frac{\sin(\pi\text{-}\phi)}{R_1} = \frac{\sin(\pi\text{-}\alpha)}{R_2} \qquad (4)$$

die Beziehung zwischen dem Winkel $\phi$ und dem Winkel $\alpha$ zu:

$$\phi = \arctan\left(\frac{R_1 \sin\alpha}{R_2 \cos\alpha - R_2}\right) \qquad (5).$$

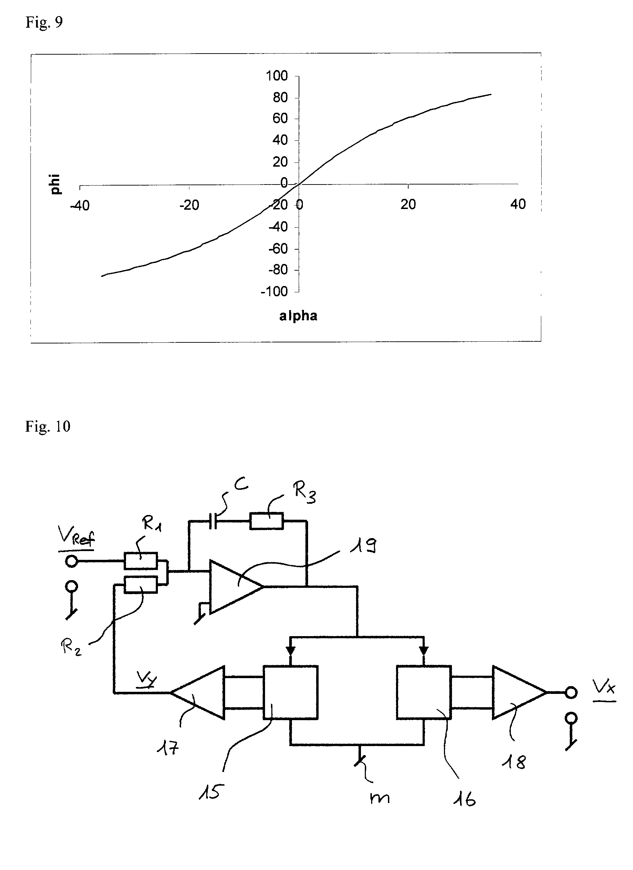

Die Fig. 9 zeigt die Beziehung $\phi(\alpha)$ für den Fall $R_2 = \frac{1}{2} R_1$. Die Beziehung $\phi(\alpha)$ ist im Bereich von $\alpha = -7°$ bis $\alpha = +7°$ linear innerhalb von $\pm 1\%$. Im Fall $R_2 = \frac{3}{4} R_1$ ist die Beziehung $\phi(\alpha)$ im Bereich von $\alpha = -3.5°$ bis $\alpha = +3.5°$ linear innerhalb von $\pm 1\%$.

Aus dem mittels des Magnetfeldsensors 3 aus den Komponenten $B_x$ und $B_y$ des Magnetfeldes gewonnenen Signal ergibt sich aus der Beziehung $\phi = \arctan\frac{B_x}{B_y}$ und Gleichung (5) die Beziehung

$$\left(\frac{R_1 \sin\alpha}{R_2 \cos\alpha - R_2}\right) = \frac{B_x}{B_y} \qquad (6).$$

Als Positionssignal kann nun der Winkel $\alpha$ aus der Gleichung (6) ermittelt werden. Das Positionssignal $\alpha(B_x/B_y)$ ist, wie oben dargelegt, innerhalb vorbestimmter Grenzen eine lineare Funktion des Quotienten $B_x/B_y$.

Es sei hier angemerkt, dass im Spezialfall, wo der Magnetfeldsensor 3 im Zentrum des von der Magnetfeldquelle 2 durchlaufenen Kreises angeordnet ist, es nicht nötig ist, dass das Magnetfeld irgendeine Symmetrie aufweist. Als Magnetfeldquelle kann z.B. auch ein zylinderförmiger Permanentmagnet verwendet werden, dessen Symmetrieachse zum Kreismittelpunkt zeigt. Auch kann dann $Z_S = 0$ gewählt werden.

Die Fig. 10 zeigt eine elektronische Schaltung für einen Magnetfeldsensor 3, der ein erstes Hallelement 15 zur Messung der Komponente $B_y$ und ein zweites Hallelement 16 zur Messung der Komponente $B_x$ aufweist. Die Division der gemessenen Komponenten des Magnetfeldes erfolgt analog, weil bei dieser Schaltung der durch das zweite Hallelement 16 fliessende Strom proportional zur Hallspannung des ersten Hallelementes 15 ist. Die Schaltung liefert ein Ausgangssignal $V_{Out}$, das proportional zum Verhältnis $B_x/B_y$ ist. Ein Massepotential der Schaltung ist mit m bezeichnet. Die Schaltung umfasst:

- einen ersten Operationsverstärker 17, der die sich zwischen den beiden Spannungskontakten des ersten Hallelementes 15 einstellende Hallspannung differentiell abgreift und bezüglich des Massepotentials m referenziert. Für das Ausgangssignal $V_y$ des ersten Operationsverstärkers 17 gilt bei einem Verstärkungsfaktor von Eins: $V_y = S_1 * I_1 * B_y$, wobei $I_1$ den durch das erste Hallelement 15 fliessenden Strom und $S_1$ die Empfindlichkeit des ersten Hallelementes 15 bezeichnen.

- einen zweiten Operationsverstärker 18, der die sich zwischen den beiden Spannungskontakten des zweiten Hallelementes 16 einstellende Hallspannung differentiell abgreift, verstärkt und bezüglich des Massepotentials m referenziert. Für das Ausgangssignal $V_x$ des zweiten Operationsverstärkers 18 gilt bei einem Verstärkungsfaktor von Eins: $V_x = S_2 * I_2 * B_x$, wobei $I_2$ den durch das zweite Hallelement fliessenden Strom und $S_2$ die Empfindlichkeit des zweiten Hallelementes 16 bezeichnen. Das Ausgangssignal $V_x$ des zweiten Operationsverstärkers 18 dient als Ausgangssignal $V_{Out}$ der Schaltung: $V_{Out} = V_x$. Da die beiden Hallelemente 15 und 16 parallel geschaltet sind, gilt $I_1 = I_2$. Da die beiden Hallelemente 15 und 16 zudem möglichst gleiche Eigenschaften aufweisen sollen, gilt

$S_1 = S_2$.

- einen aus einem dritten Operationsverstärker 19, einem Widerstand $R_3$ und einem Kondensator C gebildeten PI-Regler, dessem invertierenden Eingang über einen ersten Widerstand $R_1$ eine Referenzspannung $V_{Ref}$ und über einen zweiten Widerstand $R_2$ die Ausgangsspannung $V_y$ des ersten Operationsverstärkers 17 zugeführt wird und dessen nicht invertierender Eingang mit der Masse m verbunden ist. Über die aus dem ersten Hallelement 15 und dem ersten Operationsverstärker 17 gebildete Regelstrecke stellt sich $V_y = -V_{Ref}$ ein.

Der Ausgang des dritten Operationsverstärkers 19 speist je einen Stromkontakt des ersten und des zweiten Hallelementes 15 bzw. 16, während der andere Stromkontakt der beiden Hallelemente 15 und 16 an der Masse m liegt.

Durch Umformung der Gleichungen erhält man $V_{Out} = -V_{Ref} * B_x/B_y$.

Die folgenden Beispiele betreffen magnetische Weggeber, bei denen entweder mindestens ein weiterer Magnetfeldsensor oder mindestens eine weitere Magnetfeldquelle vorgesehen ist, um den linearen Arbeitsbereich zu vergrössern.

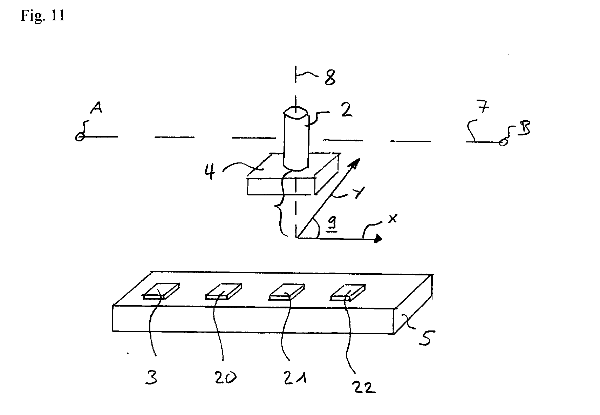

Die Fig. 11 zeigt eine Vorrichtung mit einem magnetischen Weggeber, bei dem auf dem Bestandteil 5 ein zweiter, und fakultativ ein dritter, vierter, etc. Magnetfeldsensor 20, 21 bzw. 22 angeordnet ist. Die Magnetfeldsensoren 3, 20, 21 und 22 sind in Bewegungsrichtung, d.h. in Richtung der Geraden 7 in einem vorbestimmten Abstand A angeordnet. Bei dem anhand der Figuren 1 und 2 erläuterten Zahlenbeispiel war das Signal des Magnetfeldsensors 3 in einem Arbeitsbereich von $X_S = -1.5$ mm bis $X_S = +1.5$ mm bei einer vorgegebenen Genauigkeit von $\pm$ 2% linear. Wenn nun der Abstand A zu A = 3 mm festgelegt wird, dann befindet sich immer jeweils einer der Magnetfeldsensoren 3, 20, 21 oder 22 in seinem linearen Arbeitsbereich. Da das Signal der Magnetfeldsensoren 3, 20, 21 und 22 gemäss Gleichung (2) monoton ist, kann aus den vier Signalen der Magnetfeldsensoren 3, 20, 21 und 22 dasjenige Signal bestimmt werden, das zu demjenigen Magnetfeldsensor gehört, der sich im linearen Bereich befindet. Dies ist nämlich immer dasjenige Signal mit dem kleinsten Absolutwert.

Eine andere Möglichkeit, den Arbeitsbereich zu erweitern, besteht darin, mehrere Magnetfeldquellen zu verwenden, z.B. ein Magnetband mit periodisch abwechselnder Richtung der Magnetisierung Nord-Süd. In der Regel sind dann aber zwei Magnetfeldsensoren nötig, so dass jeweils mindestens einer ein brauchbares Signal liefert. Auf diese Weise können allfällige Totbereiche des erzeugten Magnetfeldes überbrückt werden.

**Patentansprüche**

1. Vorrichtung mit einem magnetischen Weggeber, der eine Magnetfeldquelle (2) und einen Magnetfeldsensor (3; 3.1) umfasst, die relativ zueinander verschiebbar sind, wobei der Magnetfeldsensor (3; 3.1) zwei Komponenten des von der Magnetfeldquelle (2) erzeugten Magnetfeldes misst und wobei aus den gemessenen Komponenten ein Positionssignal abgeleitet wird, **dadurch gekennzeichnet, dass** die Bestimmung des Positionssignals eine Division der beiden gemessenen Komponenten des Magnetfeldes beinhaltet.

2. Vorrichtung nach Anspruch 1, **dadurch gekennzeichnet, dass** das von der Magnetfeldquelle (2) erzeugte Magnetfeld rotationssymmetrisch bezüglich einer Symmetrieachse (8) ist und dass der Magnetfeldsensor (3; 3.1) zwei Komponenten des Magnetfeldes misst, die in einer zur Symmetrieachse (8) der Magnetfeldquelle (2) orthogonal verlaufenden Ebene (9) liegen.

3. Vorrichtung nach Anspruch 2, **dadurch gekennzeichnet, dass** ein zweiter Magnetfeldsensor (3.2) vorhanden ist, der ebenfalls zwei in der Ebene (9) liegende Komponenten des Magnetfeldes misst, und dass das Positionssignal aus den Signalen des ersten und des zweiten Magnetfeldsensors (3.1, 3.2) gebildet wird.

4. Vorrichtung nach Anspruch 1 oder 2, **dadurch gekennzeichnet, dass** mindestens ein weiterer Magnetfeldsensor (20; 21; 22) vorhanden ist, der bezüglich des ersten Magnetfeldsensors (3) in Bewegungsrichtung der Relativverschiebung von Magnetfeldquelle (2) und Magnetfeldsensor (3) angeordnet ist.

5. Vorrichtung nach Anspruch 1 oder 2, **dadurch gekennzeichnet, dass** mindestens eine weitere Magnetfeldquelle vorhanden ist, die bezüglich der ersten Magnetfeldquelle (2) in Bewegungsrichtung der Relativverschiebung von Magnetfeldquelle (2) und Magnetfeldsensor (3) angeordnet ist.

6. Vorrichtung nach Anspruch 1 oder 2, **dadurch gekennzeichnet, dass** sich die Magnetfeldquelle (2) bei der Relativverschiebung entlang einer kreisförmigen Bahn (6) bewegt und dass der Abstand des Magnetfeldsensors (3) von der kreisförmigen Bahn (6) kleiner als der Radius der kreisförmigen Bahn (6) ist.

7.  Vorrichtung nach einem der Ansprüche 1 bis 6, **dadurch gekennzeichnet, dass** ein ferromagnetisches Joch (10) vorhanden ist, um das Magnetfeld in die Ebene (9) zu konzentrieren.

8.  Vorrichtung nach einem der Ansprüche 1 bis 7, **dadurch gekennzeichnet, dass** eine elektronische Schaltung zum Betrieb des Magnetfeldsensors (3) vorgesehen ist, wobei der Magnetfeldsensor (3) ein erstes Hallelement (15) für die Messung der ersten Komponente des Magnetfeldes und ein zweites Hallelement (16) für die Messung der zweiten Komponente des Magnetfeldes aufweist, wobei die Division der gemessenen Komponenten des Magnetfeldes analog erfolgt, indem der durch das zweite Hallelement (16) fliessende Strom proportional zur Hallspannung des ersten Hallelementes (15) ist.

Fig. 1

Fig. 2

Fig. 3

Fig. 4

Fig. 5

Fig. 6

Fig. 7

Fig. 8

Fig. 9

Fig. 10

Fig. 11

Europäisches
Patentamt

# EUROPÄISCHER RECHERCHENBERICHT

Nummer der Anmeldung

EP 01 81 0298

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 979 988 A (FESTO AG & CO ;WINDHORST BETEILIGUNGSGESELLSC (DE)) 16. Februar 2000 (2000-02-16) * das ganze Dokument * | 1,5 | G01D5/14 G01D5/16 |
| Y |  | 4 |  |
| A |  | 2,8 |  |
| X | WO 97 25592 A (BOSCH GMBH ROBERT ;DUKART ANTON (DE); ZABLER ERICH (DE)) 17. Juli 1997 (1997-07-17) * Seite 6, Absatz 3 - Seite 7, Absatz 2; Abbildungen 4-6 * | 1 |  |
| A |  | 2 |  |
| X | US 4 893 502 A (KUBOTA MASANORI  ET AL) 16. Januar 1990 (1990-01-16) * Spalte 3, Zeile 22 - Spalte 6, Zeile 19; Abbildungen 1-7 * | 1 |  |
| Y | EP 0 590 222 A (SGS THOMSON MICROELECTRONICS) 6. April 1994 (1994-04-06) * Zusammenfassung; Abbildung 1 * | 4 | RECHERCHIERTE SACHGEBIETE (Int.Cl.7) G01D |
| A | WO 98 54547 A (METZ MATTHIAS ;MAIER CHRISTOPH (CH); HAEBERLI ANDREAS (CH); LAB FU) 3. Dezember 1998 (1998-12-03) * das ganze Dokument * | 1 |  |

Der vorliegende Recherchenbericht wurde für alle Patentansprüche erstellt

| Recherchenort | Abschlußdatum der Recherche | Prüfer |
|---|---|---|
| DEN HAAG | 31. August 2001 | Chapple, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 01 81 0298

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-08-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 0979988 | A | 16-02-2000 | DE | 19836599 A | 17-02-2000 |
| WO 9725592 | A | 17-07-1997 | DE | 19600616 A | 17-07-1997 |
| | | | EP | 0873497 A | 28-10-1998 |
| | | | JP | 2000502805 T | 07-03-2000 |
| US 4893502 | A | 16-01-1990 | JP | 1248010 A | 03-10-1989 |
| | | | JP | 2845884 B | 13-01-1999 |
| | | | JP | 1037607 A | 08-02-1989 |
| | | | DE | 3826408 A | 16-02-1989 |
| | | | GB | 2208549 A,B | 05-04-1989 |
| EP 0590222 | A | 06-04-1994 | DE | 69312619 D | 04-09-1997 |
| | | | DE | 69312619 T | 04-12-1997 |
| | | | EP | 0591113 A | 06-04-1994 |
| | | | JP | 6296010 A | 21-10-1994 |
| | | | US | 5530345 A | 25-06-1996 |
| WO 9854547 | A | 03-12-1998 | EP | 0916074 A | 19-05-1999 |

EPO FORM P0461

Für nähere Einzelheiten zu diesem Anhang : siehe Amtsblatt des Europäischen Patentamts, Nr.12/82